(19) **Europäisches Patentamt / European Patent Office / Office européen des brevets**

(11) **EP 3 498 007 B1**

(12) **EUROPEAN PATENT SPECIFICATION**

(45) Date of publication and mention of the grant of the patent:
**18.12.2019 Bulletin 2019/51**

(21) Application number: **17754849.2**

(22) Date of filing: **14.08.2017**

(51) Int Cl.:
**H04W 74/08** *(2009.01)* **H04W 72/04** *(2009.01)*
**H04W 4/70** *(2018.01)* **H04W 74/00** *(2009.01)*

(86) International application number:
**PCT/SE2017/050823**

(87) International publication number:
**WO 2018/030953 (15.02.2018 Gazette 2018/07)**

(54) **LOAD DISTRIBUTION FOR RANDOM ACCESS**

BELASTUNGSVERTEILUNG FÜR DIREKTZUGRIFF

DISTRIBUTION DE CHARGE POUR ACCÈS ALÉATOIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.08.2016 US 201662374305 P**
**12.08.2016 US 201662374718 P**

(43) Date of publication of application:
**19.06.2019 Bulletin 2019/25**

(73) Proprietor: **Telefonaktiebolaget LM Ericsson (publ)**
**164 83 Stockholm (SE)**

(72) Inventors:
• **RATHONYI, Béla**
**SE-234 37 Lomma (SE)**
• **NADER, Ali**
**SE-212 42 Malmö (SE)**
• **HÖGLUND, Andreas**
**170 62 Solna (SE)**

(74) Representative: **Ericsson**
**Patent Development**
**Torshamnsgatan 21-23**
**164 80 Stockholm (SE)**

(56) References cited:
**WO-A1-2011/041926    WO-A1-2013/026184**
**WO-A1-2015/108382**

**Description**

BACKGROUND

Machine Type Communication (MTC) generally refers to devices that communicate without human interaction, i.e. devices built into machines. MTC is part of the even more general discussion of Internet of things (IoT), where it is envisioned that all devices that can benefit from being connected will be connected. Predictions for coming years' suggest that there will be a very large number of MTC devices. Many of these devices such as Narrowband Internet of Things (NB-IoT) devices will probably be fairly stationary, e.g. the device is located in a vending machine and perhaps even built into walls. These devices are meant to last many years and operate without chargers. For example, the NB-IoT system which is based on existing Long Term Evolution (LTE) systems and addresses optimized network architecture and improved indoor coverage for massive number of devices is designed for the following characteristics: low throughput devices (e.g. 2 kbps), low delay sensitivity (~10 seconds), ultra-low device cost (below 5 dollars), low device power consumption (battery life of 10 years).

It is envisioned that each cell (~1 km$^2$) in this system will serve many thousands of devices such as sensors, meters, actuators, and the like. In order to be able to make use of existing spectrum for, e.g. Global System for Mobile communications, GSM, a fairly narrow bandwidth (180 KHz bandwidth, same as one LTE Physical Resource Block (PRB)) has been adopted for NB-IoT technology.

For Frequency Division Duplexing (FDD) mode of NB-IoT (i.e. the transmitter and the receiver operate at different carrier frequencies) only half-duplex mode needs to be supported in the user equipment (UE). In order to achieve improved coverage, data repetition is used both in uplink (UL) and/or downlink (DL). The lower complexity of the devices (e.g. only one transmission/receiver chain) means that some repetition might be needed also in normal coverage. Further, to alleviate UE complexity, the working assumption is to have cross-subframe scheduling. That is, a transmission is first scheduled on a narrowband Physical DL Control Channel (NPDCCH) and then the first transmission of the actual data on the narrowband Physical DL Shared Channel (NPDSCH) is carried out after the final transmission of the NPDCCH. Similarly, for UL data transmission, information about resources scheduled by the network and needed by the UE for UL transmission is first conveyed on the NPDCCH and then the first transmission of the actual data by the UE on the Physical UL Shared Channel (NPUSCH) is carried out after the final transmission of the NPDCCH. In other words, for both cases above, there is no simultaneous reception of control channel and reception/transmission of data channel from the UE's perspective.

Furthermore, not all the subframes are available for dedicated data communication in DL in an NB-IoT cell. The amount of available subframes in the DL is dependent on one of the three operation modes (i.e. Stand-alone, In-band, and Guard-band) NB-IoT is deployed in. For all operation modes, a UE needs to rate-match around the following non-available subframes (or parts of subframe): (i) the NB-IoT primary and secondary synchronization channels (NPSS, and NSSS), where NPSS are transmitted every radio frame that has a length of 10ms and consists of 10 subframes and NSSS transmission cycle is every other frame in subframe number 5; (ii) the NB-IoT broadcast channel (NPBCH) containing the Master Information Block (MIB) which occupies subframe 0 in every radio frame; (iii) the NB-IoT system information blocks broadcast on NPDSCH (e.g. NSIB1 broadcast in subframe 4 of every other radio frame); (iv) DL gaps when configured; (v) NB-IoT reference symbols (NRS); and (vi) in the case in-band operation mode, LTE reference symbols such as cell-specific reference signal (CRS) and positioning reference signal (PRS), and LTE multicast-broadcast single frequency network (MBSFN) subframes.

Due to the nature of NB-IoT with half-duplex communication, cross-subframe scheduling, low bandwidth, the available amount of subframes, and the amount of UEs to be served, NB-IoT will naturally benefit from utilizing more spectrum for efficient operation, especially if such spectrum is already available (e.g. in an in-band operation mode during low traffic hours when LTE carrier is not fully used). Therefore, in 3GPP Rel-13, NB-IoT multi-carrier operation has been adopted where the UE operating in an NB-IoT anchor carrier is configured through higher layer signaling (Layer 3 radio resource control, RRC) to operate in an NB-IoT non-anchor carrier during connected mode operation. Note that the non-anchor carrier does not have the requirement to be deployed on the 100 kHz raster; i.e. any LTE in-band PRB can be used as non-anchor. At the end of connected mode operation, the UE autonomously returns back to the anchor carrier.

According to 3GPP Rel-13, in connected mode, all Random Access (RA) attempts are to be performed on the anchor carrier. After the contention resolution (message 4, MSG4) of the random access procedure, the UE goes back to the carrier that was serving it autonomously or the network provides an explicit configuration to the UE steering it to another carrier.

For Rel-14, it has now been proposed to extend this multi-carrier operation and according to one of the Rel-14 work item objectives, unlike Rel-13 operation, UEs shall be able to both monitor paging and perform Random Access on non-anchor carriers.

For Rel-13 of NB-IoT, several limitations were put on multi-carrier functionality. With regards to the random access procedure, these limitations include: (i) the RA procedure is performed on anchor physical resource blocks (PRBs); (ii) If the UE needs to perform a RA procedure while on non-anchor carrier (e.g. due to scheduling request (SR) or PDCCH order) it goes back to the UL/DL anchor carrier to perform the random access procedure.

Further, at RAN2#94 it was agreed as per 3GPP TS 36.321 that, after RACH, when the UE was served on a non-anchor carrier, the UE will go back to the non-anchor carrier where it was previously served.

WO 2011/041926 A1 addresses the RACH procedure in LTE Rel-8 systems and inherent risk of collision. An object is to accomplish flexible RACH load balancing by the use of RACH load indicator bits on a BCH in a multiple component carriers (CCs) wireless communication system. There is a plurality of component carriers with random access channels that can be selected based on received load indicator bits.

WO 2013/026184 A1 relates to random access channel resource selection in a multicarrier wireless communication system. A UE receives a plurality of selection probabilities for a respective plurality of component carriers. The selection probabilities are quantitative values received from a base station via a paging message on a paging channel. A random-access channel resource is then selected on a component carrier of the plurality of component carriers based on the plurality of selection probabilities.

WO 2015/108382 A1 is about handling of special SCell selection in dual connectivity and more particularly to a UE operating in dual connectivity mode in wireless communication networks.

SUMMARY

The present invention is defined in the independent claims. Advantageous implementation examples of the invention are defined in the dependent claims. According to some embodiments herein, configuration information governs on which carrier within a set of carriers a wireless device is to perform random access, where that set of carriers include an anchor carrier and one or more non-anchor carriers. A network node may for instance transmit the configuration information to the wireless device, e.g., as part of the network node performing load distribution across the anchor carrier and non-anchor carrier(s) in the set.

More particularly, embodiments herein include a method performed by a wireless device in a wireless communication system for performing random access. The wireless device supports random access on a non-anchor carrier. The method comprises obtaining configuration information that governs on which carrier within a set of carriers the wireless device is to perform random access, wherein the set of carriers includes an anchor carrier and a non-anchor carrier. In some embodiments, the configuration information indicates a probability value that is assigned to each of one or more of the carriers in the set .The method further comprises selecting, from among the carriers in the set, a carrier on which to perform random access, in accordance with the configuration information. The method also comprises performing random access on the selected carrier.

In some embodiments, such selection comprises randomly selecting the carrier from among the carriers in the set using probability values that are assigned to the respective carriers in accordance with the configuration information. In one such embodiment, the method may further comprise calculating one or more of the probability values from the configuration information.

In some embodiments, obtaining the configuration information comprises receiving the configuration information via system information broadcast.

In any of these embodiments, the selection may comprise randomly drawing a value and comparing the randomly drawn value to the probability value assigned to at least one of the carriers in the set.

Alternatively or additionally, the selection may comprise selecting a random access radio resource from among different random access radio resources on the different respective carriers in the set. In this case, random access may be performed on the selected random access radio resource.

Embodiments herein also include a method performed by a network node configured for use in a wireless communication system. The method comprise transmitting, to a wireless device that supports random access on a non-anchor carrier, configuration information that governs on which carrier within a set of carriers the wireless device is to perform random access. The set of carriers includes an anchor carrier and one or more non-anchor carriers. The configuration information in some embodiments indicates a probability value that is assigned to each of one or more of the carriers in the set.

In some embodiments, in accordance with the configuration information probability values are assigned to respective carriers in the set for use by the wireless device in randomly selecting a carrier on which to perform random access.

In some embodiments, the configuration information may be broadcasted as system information.

In any of the methods by the wireless device or the network node, a probability value assigned to the anchor carrier may be configurable to be different than a probability value assigned to a non-anchor carrier. Alternatively or additionally, probability values assigned to respective non-anchor carriers may be configurable to be equal. Alternatively or additionally, , probability values assigned to respective non-anchor carriers may be equal.

In some embodiments, different random access radio resources are defined on different respective carriers in the set for a coverage enhancement level of the wireless device.

In some embodiments, the carriers in the set are uplink carriers.

In some embodiments, the wireless communication system is a narrowband internet of things (NB-IoT) system.

Embodiments herein also include corresponding apparatus, computer programs, and carriers (E.g. non-transitory computer readable medium).

For example, embodiments herein further include a wireless device configured for use in a wireless communication system for performing random access, wherein the wireless device is configured to support random access on a non-anchor carrier. The wireless device is configured to obtain configuration information that governs on which carrier within a set of carriers the wireless device is to perform random access, wherein the set of carriers includes an anchor carrier and a non-anchor carrier. In some embodiments, the configuration information indicates a probability value that is assigned to each of one or more of the carriers in the set. The wireless device is further configured to, from among the carriers in the set, a carrier on which to perform random access, in accordance with the configuration information. The wireless device is also configured to perform random access on the selected carrier.

Embodiments also include network node configured for use in a wireless communication system. The network node is configured to transmit, to a wireless device that supports random access on a non-anchor carrier, configuration information that governs on which carrier within a set of carriers the wireless device is to perform random access. The set of carriers includes an anchor carrier and one or more non-anchor carriers. The configuration information in some embodiments indicates a probability value that is assigned to each of one or more of the carriers in the set.

BRIEF DESCRIPTION OF THE DRAWINGS

Figure 1 is a block diagram of a wireless communication system according to some embodiments.
Figure 2A is a logic flow diagram of a method performed by a network node according to some embodiments.
Figure 2B is a logic flow diagram of a method performed by a wireless device according to some embodiments.
Figure 3 is a block diagram of a wireless communication system that includes uplink carriers for random access according to some embodiments.
Figure 4 is a logic flow diagram of a method performed by a network node according to other embodiments.
Figure 5 is a logic flow diagram of a method performed by a network node according to still other embodiments.
Figure 6 is a block diagram of a network node according to some embodiments.
Figure 7 is a block diagram of a network node according to other embodiments.
Figure 8 is a block diagram of a network node according to yet other embodiments.
Figure 9 is a block diagram of a wireless device according to some embodiments.
Figure 10 is a block diagram of a wireless device according to still other embodiments.

DETAILED DESCRIPTION

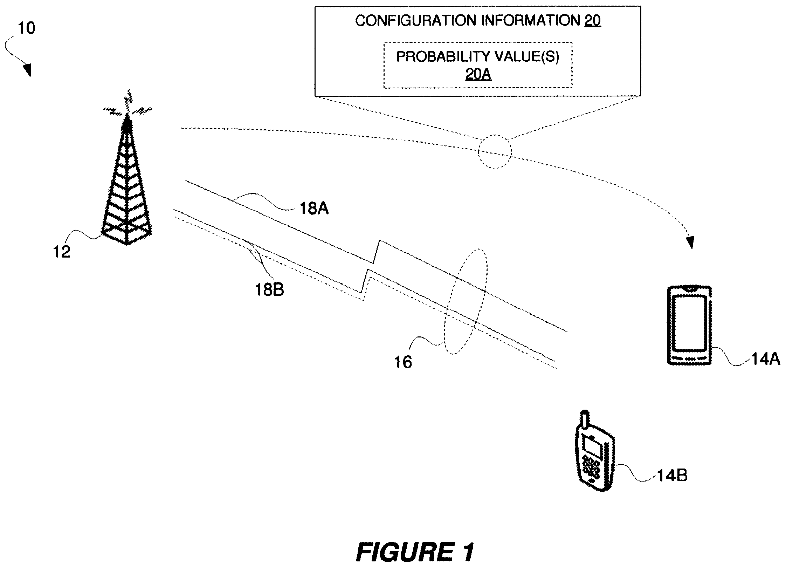

Figure 1 illustrates a wireless communication system 10 (e.g., a narrowband internet-of-things, NB-IoT, system) according to some embodiments. The system 10 as shown includes a network node 12 (e.g., a base station) and wireless devices 14A, 14B (e.g., user equipments, UEs). The system 10 provides a set 16 of carriers on which supporting wireless devices may perform random access to the system 10 (in whole or in part). The carriers in the set 16 may for example be uplink carriers on which wireless devices transmit one or more uplink messages towards the network node 12 as part of a random access procedure. Alternatively, the carriers in the set 16 may be downlink carriers on which wireless devices receive one or more downlink messages from the network node 12 as part of the random access procedure.

No matter whether the carriers in the set 16 are uplink or downlink, though, the carriers as shown include an anchor carrier 18A and one or more non-anchor carriers 18B. In NB-IoT embodiments, for instance, the anchor carrier 18A is an NB-IoT anchor carrier and the non-anchor carrier(s) 18B are NB-IoT non-anchor carriers.

In some embodiments, wireless device 14A may support performing random access on any of the carriers in the set 16, no matter whether the carrier is an anchor carrier 18A or a non-anchor carrier 18B. That is, wireless device 14A supports random access on the anchor carrier 18A and also supports random access on a non-anchor carrier 18B. But wireless device 14B may support performing random access on an anchor carrier 18A in the set, but not a non-anchor carrier 18B. In NB-IoT embodiments, for instance, wireless device 14A may be a Rel-14 NB-IoT device and wireless device 14B may be a Rel-13 NB-IoT device. In these and other embodiments, circumstances may threaten to impose unbalanced load across the carriers in the set 16 since random access may be performed on some carriers (e.g., the anchor carrier 14A) more than others (e.g., non-anchor carriers 14B).

According to some embodiments herein, configuration information 20 governs on which carrier within the set 16 of carriers wireless device 14A is to perform random access. The network node 12 may for instance transmit this configuration information 20 to wireless device 14A, e.g., as part of the network node 12 performing load distribution across the anchor carrier 18A and non-anchor carrier(s) 18B in the set 16.

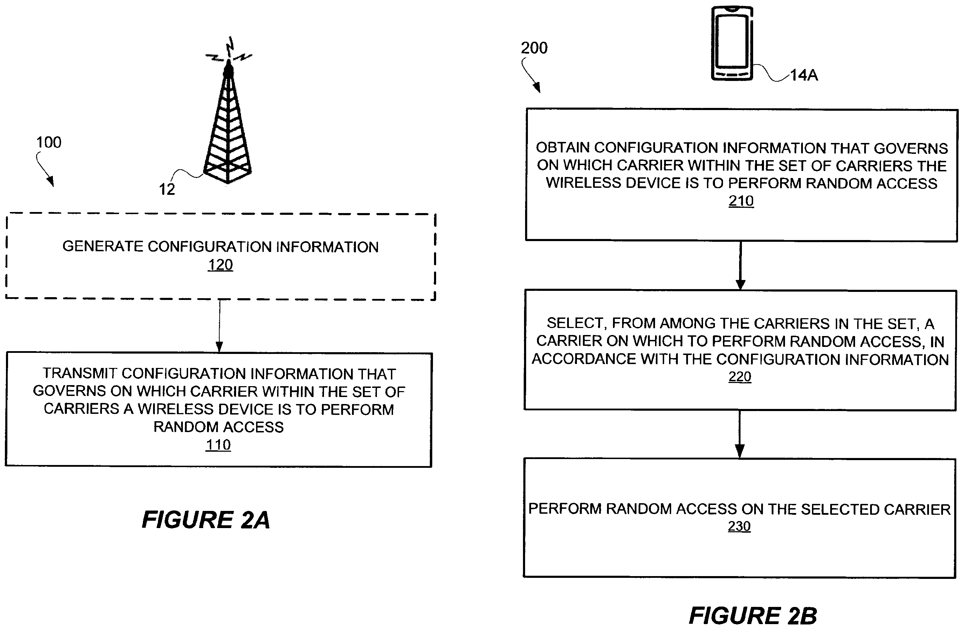

Figure 2A for example shows a method 100 performed by network node 12 in this regard. The method 100 includes transmitting configuration information 20 that governs on which carrier within the set 16 of carriers the wireless device 14A is to perform random access (Block 110), where the wireless device 14A supports random access on a non-anchor carrier 18B. In some embodiments, for example, the network node 12 may transmit the configuration information 20 by broadcasting the configuration information 20 as system information. Regardless, the method 100 in some embodiments may also include generating the configuration information 20 (Block 120), e.g., as part of performing load distribution across the set 16 of carriers.

Figure 2B illustrates a method 200 correspondingly performed by wireless device 14A, which supports random access on a non-anchor carrier 18B. As shown, the method 200 includes obtaining configuration information 20 that governs on which carrier within the set 16 of carriers the wireless device 14A is to perform random access (Block 210), e.g., by receiving the configuration information 20 from network node 12. The method 200 also includes selecting, from among the carriers in the set 16, a carrier on which to perform random access, in accordance with the configuration information 20 (Block 220). The method may then further include performing random access on the selected carrier (Block 230).

The configuration information 20 may govern on which carrier within the set 16 of carriers the wireless device 14A is to perform random access in any number of ways. In general, for instance, the information may dictate, for each of one or more carriers, how many wireless devices are permitted to perform random access on that carrier, or at least how many wireless devices that support random access on a non-anchor carrier are permitted to perform random access on that carrier.

In some embodiments, the configuration information 20 governs random access carrier selection in these or other ways using an identity of the wireless device 14A. The wireless device's selection in this case may be performed based on the device's identity and the configuration information 20. In one embodiment, for instance, the configuration information 20 comprises a number X, and the wireless device 14A selects the anchor carrier 14A or a non-anchor carrier 14B depending respectively on whether or not the wireless device's identity is evenly divisible by the number X. Where the device's identity is not evenly divisible by X, the device 14A may select from among Y non-anchor carriers 14B in the set 16 a certain non-anchor carrier, e.g., with a carrier index equal to (UE_ID div X) mod Y or floor(UE_ID / X) mod Y, where UE_ID is the device's identity. In still other embodiments, though, the configuration information 20 may indicate, for each of one or more carriers in the set 16, a device identity bitmask assigned to that carrier. In this case, the wireless device 14A may select the carrier on which to perform random access by computing an output of a function which takes as an input the wireless device's identity and comparing the output to one or more device identity bitmasks indicated by the configuration information 20.

In still other embodiments, the configuration information 20 governs random access carrier selection by indicating a threshold value. In this case, the wireless device 14A may select the carrier on which to perform random access by generating a random value within a specified range of values, comparing the random value with the threshold value, and selecting either an anchor carrier or a non-anchor carrier depending on a result of the comparison.

Alternatively or additionally, the configuration information 20 may govern random access carrier selection by, as shown in Figure 1, indicating a probability value 20A that is assigned to each of one or more of the carriers in the set 16, e.g., for comparison to a value randomly drawn by the wireless device 14A. The probability value assigned to a carrier may for instance control or govern the probability of the wireless device 14A selecting that carrier for performing random access. For example, the wireless device 14A in some embodiments is configured to randomly select the carrier on which to perform random access from among the set 16 using probability values that are assigned to the respective carriers in accordance with the configuration information 20. In these and other embodiments, the wireless device 14A may randomly draw a value and compare the randomly drawn value to the probability value assigned to at least one of the carriers in the set 16.

Consider an example where the probability value(s) are cumulative probability value(s). In this case, the wireless device 14A may draw a random number between 0 and 1, and compare that random number to the cumulative probability values for the respective carriers in the set 16. If, for instance, carrier 1 has a probability value of 0.5, carrier 2 has a probability value of 0.75, and carrier 3 has a probability value of 1.0, the wireless device 14A selects carrier 1 if the random number is less than or equal to 0.5, selects carrier 2 if the random number is greater than 0.5 but less than or equal to 0.75, and selects carrier 3 if the random number is greater than 0.75.

As this example suggests, the probability value for at least one of the carriers may be implicitly assumed (e.g., carrier 3 has a probability value of 1.0), meaning that the probability value need not be signaled. In some embodiments, therefore, the wireless device 14A may be configured to calculate or otherwise determine one or more of the probability values from the configuration information 20, e.g., as a function of one or more of the probability values that are signaled in the configuration information 20.

Regardless of the particular signaling approach, a probability value assigned to the anchor carrier 18A is configurable in some embodiments to be different than a probability value assigned to a non-anchor carrier 18B. In fact, in some embodiments, probability values assigned to respective non-anchor carriers in the set 16 are (or are at least configurable) to be equal. In the case that such non-anchor probability values are equal, assigning different probability values to the anchor carrier 18A and each non-anchor carrier 18B may effectively control or govern whether the wireless device 14A performs random access on the anchor carrier 18A or any non-anchor carrier 18B. Such steering of the device 14A may be performed by the network node 12 as part of (more evenly) distributing or balancing the load across the carriers (or types of carriers) in the set 16, e.g., to account for load imbalance attributable to imbalance in the number of (e.g., Rel-14) wireless devices that support random access on a non-anchor carrier and the number of (e.g., Rel-13) wireless devices that only support random access on an anchor carrier.

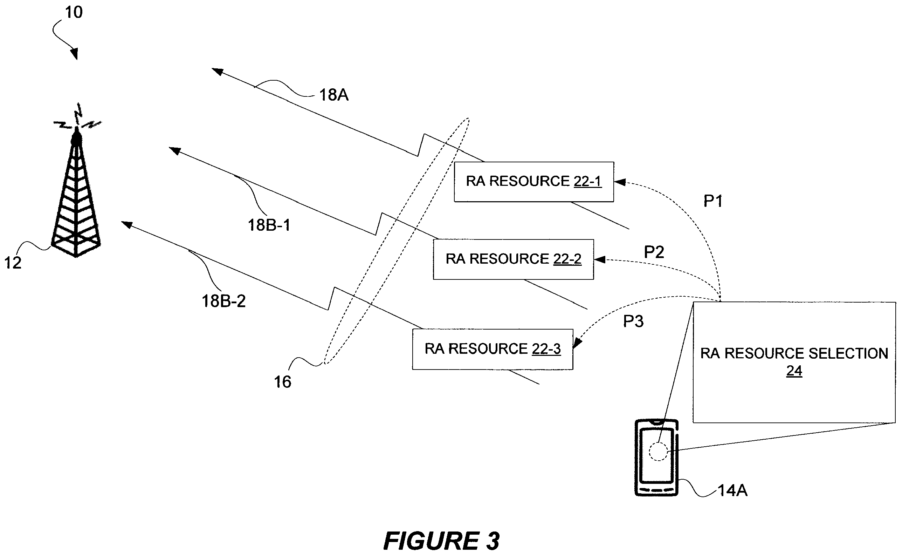

Note that the wireless device's selection of the carrier on which to perform random access may in some embodiments take the form of selecting a random access radio resource on which to perform random access. For example, in some embodiments, different random access radio resources may be defined on different respective carriers in the set 16, e.g., for a certain coverage enhancement level of the wireless device 14A. In this case, by selecting a random access radio resource on which to perform random access, the wireless device 14A effectively selects a carrier on which to perform random access. In particular, the wireless device 14A in some embodiments selects a carrier on which to perform random access by selecting a random access radio resource from among different random access radio resources on the different respective carriers in the set 16, and then performs random access on the selected carrier by performing random access on the selected random access radio resource. Figure 3 illustrates one example in a context where the carriers in the set 16 are uplink carriers.

As shown in Figure 3, random access radio resources 22-1, 22-2, and 22-3 are respectively defined on uplink anchor carrier 18A, uplink non-anchor carrier 18B-1, and uplink non-anchor carrier 18B-2. The random access radio resources may be for instance narrowband physical random access channel (NPRACH) resources (defined for a coverage enhancement level of the wireless device 14A) on which wireless device 14A may transmit a random access preamble. Regardless, the wireless device 14A as shown performs random access resource selection 24 in order to select a random access radio resource from among random access radio resources 22-1, 22-2, and 22-3. The wireless device 14A then correspondingly performs random access on the selected random access resource, e.g., by transmitting a random access preamble.

Where the wireless device 14A effectively selects the carrier for random access by selecting between random access radio resources defined on respective carriers in the set 16, the configuration information 20 may indicate a probability value 20A that is assigned to each of one or more carriers in the set 16 by indicating a probability value 20A that is assigned to each of one or more random access radio resources defined on each of one or more respective carriers in the set 16. In this way, the probability value assigned to a random access radio resource may control or govern the probability of the wireless device 14A selecting that random access radio resource for performing random access, so as to effectively control or govern the probability of the wireless device 14A selecting the carrier on which that random access radio resource is defined.

In any event, as suggested above, some embodiments herein distribute load attributable to random access (e.g., in an NB-IoT system) across the set 16 of carriers. This distribution may be performed for instance by dynamically adjusting the distribution of wireless devices across the set 16 of carriers for performance of random access. This adjustment may involve for example steering at least some of the wireless devices like device 14A to perform random access on one or more non-anchor carriers 14B, e.g., as needed to alleviate load on the anchor carrier 14A attributable to random access by wireless devices like device 14B that do not support random access on a non-anchor carrier 14B.

In these and other embodiments, distribution of random access load across the set 16 of carriers may be performed as needed to account for the capacity of random access radio resources across the set of carriers and/or the competition for such resources across the set. For example, where such capacity or competition is unevenly distributed across the set, some embodiments likewise unevenly distribute random access load across the set, e.g., by unevenly distributing wireless devices across the set for performing random access.

Regardless, in one or more embodiments, the distribution is notably performed in such a way as to account for random access radio resources consumed on the anchor carrier by wireless devices like device 14B that do not support random access on a non-anchor carrier (e.g., Rel-13 UEs). For example, distribution may be performed by selectively steering wireless devices like device 14A that do indeed support random access on a non-anchor carrier (e.g., Rel-14 UEs), so as to achieve a desired distribution outcome given that wireless devices that do not support random access on a non-anchor carrier cannot be so steered. That is, distribution of devices that support random access on a non-anchor carrier is controlled to account for the uncontrollable distribution of devices that do not support random access on a non-anchor carrier. In one embodiment, therefore, imbalance between non-supporting devices and supporting devices with respect to support of random access on a non-anchor carrier prompts uneven distribution of non-supporting and supporting devices amongst the carriers.

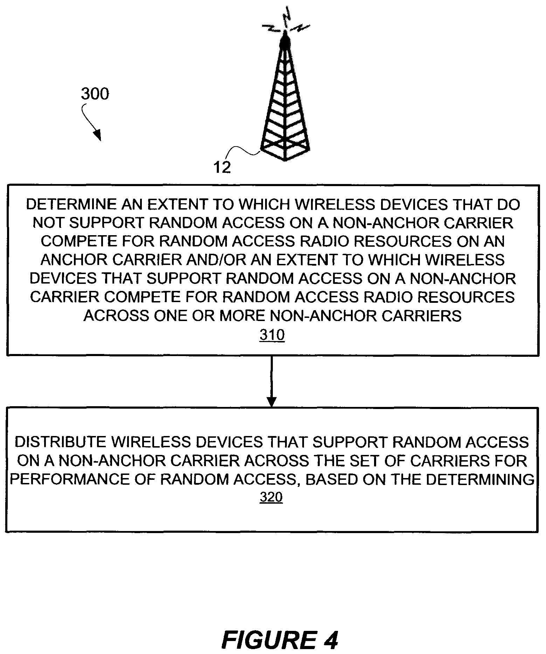

More particularly, as shown in Figure 4, embodiments herein include a method 300 performed by network node 12 for distributing load attributable to random access across multiple carriers in a wireless communication system 10. The method 300 comprises determining an extent to which wireless devices that do not support random access on a non-anchor carrier (e.g., Rel-13 UEs) compete for random access radio resources on an anchor carrier and/or an extent to which wireless devices that support random access on a non-anchor carrier (e.g., Rel-14 UEs) compete for random access radio resources across one or more non-anchor carriers (Block 310). The method also comprises distributing wireless devices that support random access on a non-anchor carrier across the set 16 of carriers for performance of random access, based on the extent determined (Block 320).

In some embodiments, the determination (Block 310) may comprise determining a ratio of (i) a number of wireless devices that do not support random access on a non-anchor carrier; and (ii) a number of random access radio resources on an anchor carrier per time unit. Additionally or alternatively, the determination may further entail determining a ratio of (i) a number of wireless devices that support random access on a non-anchor carrier; and (ii) a total number of random access radio resources per time unit summed across the one or more non-anchor carriers in the set 16.

In one or more embodiments, the method 300 involves performing biased distribution of wireless devices that support random access on a non-anchor carrier, with a bias towards distributing those wireless devices onto a non-anchor carrier for performing random access. The extent of the bias may depend on the determined extent to which wireless devices that do not support random access on a non-anchor carrier compete for random access radio resources on an anchor carrier. No matter the particular extent, though, the biased distribution in some embodiments may be performed when, according to the determination (Block 310), wireless devices that do not support random access on a non-anchor carrier compete for random access radio resources on the anchor carrier to a greater extent than an extent to which wireless devices that support random access on a non-anchor carrier compete for random access radio resources across the one or more non-anchor carriers.

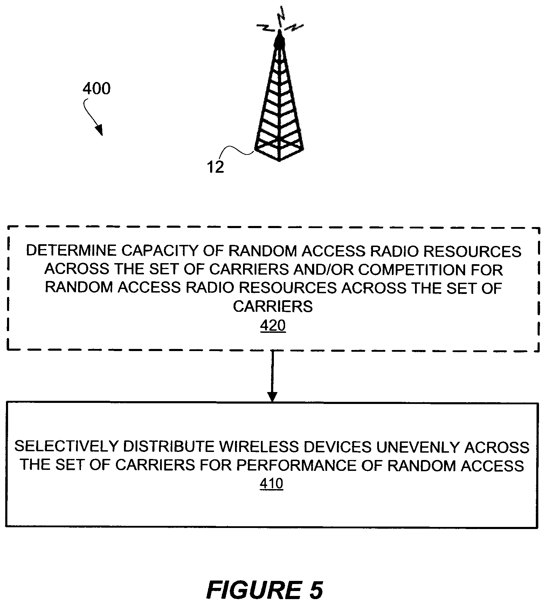

Figure 5 illustrates a method 400 of distributing load attributable to random access across multiple carriers in a wireless communication system 10, according to other embodiments. As shown, the method 400 includes selectively distributing wireless devices unevenly across the set 16 of carriers for performance of random access. (Block 410).

In some embodiments, the method 400 may also include determining a capacity of random access radio resources across the set 16 of carriers and/or competition for random access radio resources across the set 16 of carriers (Block 420). The selective distribution may be based on this determined capacity and/or competition. For example, in some embodiments, the distribution may involve distributing wireless devices unevenly across the set 16 of carriers for performance of random access, in proportion to uneven capacity of random access radio resources across the set 16 of carriers and/or uneven competition for random access radio resources across the set 16 of carriers.

Alternatively or additionally, in some embodiments, distribution entails steering wireless devices that support random access on a non-anchor carrier, to account for random access radio resources consumed on the anchor carrier by wireless devices that do not support random access on a non-anchor carrier. As one example, then, distribution may comprise performing biased distribution of wireless devices that support random access on a non-anchor carrier, with a bias towards distributing those wireless devices onto a non-anchor carrier for performing random access.

Moreover, similar to that mentioned above, the biased distribution in some embodiments may be performed when wireless devices that do not support random access on a non-anchor carrier compete for random access radio resources on the anchor carrier to a greater extent than an extent to which wireless devices that support random access on a non-anchor carrier compete for random access radio resources across the one or more non-anchor carriers. Otherwise, wireless devices may be distributed evenly across the set 16 of carriers for performance of random access.

The distribution in the methods 300, 400 of Figures 4-5 may be performed in any number of ways. In some embodiments, for example, such distribution may comprise steering wireless devices that support random access on a non-anchor carrier, as a function of identities assigned to those wireless devices, as a function of a threshold value configured for comparison to a random number generated by wireless devices within a specified range, or the like. In any event, though, distribution may comprise evenly distributing, amongst the one or more non-anchor carriers, wireless devices that support random access on a non-anchor carrier but, as dictated by the information, are not permitted to perform random access on the anchor carrier.

In general view of the above, techniques are disclosed herein for distributing the load of random access (e.g., NPRACH accesses) evenly or unevenly amongst carriers, e.g., with regards to RA attempts. In some embodiments, parameters related to the load distribution are broadcasted in a NB-IoT cell on system information.

One or more embodiments will now be described in a context of performing random access (RA) in a NB-IoT system. It shall be understood that for the sake of efficient resource utilization of the system resources, the term RA should not only relate to the narrowband physical random access channel (NPRACH) resource selection but also Msg2-Msg4 in the RA procedure.

As a result of the Rel-13 specifications, all Rel-13 user equipments (UEs) in a cell will carry out their random access (RA) procedure on the NB-IoT anchor carrier. Considering the massive amount of devices that an NB-IoT cell is supposed to serve, limiting the random access procedure to only the anchor carrier might lead to a bottleneck scenario when UEs try to access the network. Such bottleneck is unnecessary in a multi-carrier deployment considering that there actually are resources available in terms of non-anchor carriers that could offload the access related traffic. Indeed, in Rel-14, it will be possible to perform RA on non-anchor carriers. However, a traditional solution of evenly distributing UEs over the available resources on the air interface (in this case anchor and non-anchor carriers/PRBs) is not optimal for NB-IoT in case imbalance exists between the amount of Rel-13 and Rel-14 UEs in a cell.

There are various factors that impact the need for RA load distribution, one of them being the amount of UEs competing for the very same narrowband physical random access channel (NPRACH) resources in a cell. Since in some scenarios there might only be a limited amount of Rel-13 UEs in a specific cell, Rel-14 UEs should be allowed to perform RA both on anchor and on non-anchor carriers. UEs that are able to perform RA on non-anchor carriers need to know about the configuration of such carriers with regards to the RA procedure, e.g., in idle mode before the RA attempt. Therefore, such configuration may be provided at least via system information broadcast and preferably in SystemInformationBlockType2-NB where Rel-13 anchor carrier RA-related configuration resides.

Since there might be different amount of Re-13 and Rel-14 UEs in a cell competing for the same NPRACH resources with the same/comparable amount of repetition levels, there will be a need for uneven distribution of such UEs. In other words, in a cell if for NPRACH resources serving the same/comparable CE levels

$$\frac{\text{nbr of 3GPPRelease13 UEs}}{\text{nbr of anchor RA resources per time unit}} \geq \frac{\text{nbr of 3GPPRel14 UEs}}{\sum_{\text{non-anchor carriers}} \text{nbr of RA resources per time unit}}$$

then the Rel-14 UEs should preferably make their RA procedure on non-anchor carriers (e.g., be configured such that the RA procedure on a non-anchor carrier is promoted). The above inequality is referred to as the competition comparison, as it may be viewed as characterizing the extent to which Rel-13 UEs compete for RA resources per time unit on the anchor carrier versus the extent to which Rel-14 UEs compete for RA resources per time unit on the non-anchor carriers. Here, the resource per time unit may include the number of available subcarriers and NPRACH periodicity, considering that there may be different amounts of subcarriers set aside for NPRACH per time unit and with different periodicity amongst the different configurations. Similarly, if the network estimates that few Rel-13 UEs camp on the cell, then the configuration in some embodiments is such that the RA procedure for Rel-14 UEs are evenly distributed amongst all carriers including the anchor carrier.

Furthermore, depending on the amount of available NPRACH resources on anchor and non-anchor carriers, there may be more than one NPRACH resource that simultaneously fulfills the NPRACH resource selection criterion for a certain UE e.g. comparison to reference signal received power, RSRP, threshold (as per 3GPP Rel-13 TS 36.321) or any other criteria that might become relevant during Rel-14 or later. In such case, it is proposed in some embodiments that the UE is distributed amongst these resources based on a UE identity (e.g. International Mobile Subscriber Identity (IMSI) or S-TMSI) or randomly. There are different methods for how to do this uneven distribution. According to some embodiments, an approach is used similar to one of those provided in US Application No. 62/371347. But the difference there compared to this problem is that both the network and the UE must have the same understanding on what carrier/PRB resource the UE is assigned to. When distributing UEs to different NPRACH resources this is not necessary. In this description, a few other ways of distributing the load are given and also some other aspects are covered.

Some embodiments obtain uneven distribution between the anchor and non-anchor by broadcasting an integer K corresponding to a fraction value 1/K on system information (SI) that gives the distribution of how many of the Rel-14 UEs should use the anchor carrier NPRACH and then the rest of the UEs are distributed evenly among the N non-anchor carriers. Then all UEs that have "UE_ID mod K == 0" would use the anchor carrier and the rest of the UEs would be distributed to the non-anchor carrier by "(UE_ID div K) mod N" (or equivalently: "floor(UE_ID / K)), where the result is an index of the non-anchor carrier corresponding to the order it is signaled on SIB2-NB. Using this solution and broadcasting K=8 and three non-anchor carriers supporting a certain CE-level the Rel-14 UE distribution would then be 1/8=12.5% on the anchor carrier and the rest evenly distributed among the three non-anchor carrier (i.e. ~29.2% of the total number of Rel-14 UEs on each).

This solution could be summarized as distributing the load of the NPRACH resources when more than one carrier contains a NPRACH resource for a CE-level by broadcasting (on SIB2-NB) an optional integer value K corresponding to a fraction value 1/K. If present, UEs with UE_ID according to "UE_ID mod K == 0" select the anchor carrier NPRACH resource and the rest of the UEs are distributed evenly among the N non-anchor carriers according to "(UE_ID div K) mod N" where the result of the operation is an index to the order in which the non-anchor carriers are signalled on SIB2-NB. If not present, UEs are evenly distributed among the carriers by "UE_ID mod (N+1)"

An alternative solution to the above is to not use any UE identity and instead let all UEs generate a random number between 0 and (2n-1). Then a threshold value in the same range is broadcasted on system information (SI) and if the random value generated by the UE is less than this threshold value the anchor is selected; otherwise a non-anchor is randomly selected. With the same example as above and setting n=3 a threshold value of 1 would be broadcasted. The UEs then generates a value between 0 and 7 and if the result is 0 the anchor is selected.

Other embodiments are able to provide an uneven load also for the non-anchor carriers. In these embodiments, a "probability" value is assigned to each carrier (i.e. both anchor and non-anchor). In some embodiments, this is done by signaling for example one of the following [1/8, 2/8, 3/8, 4/8, 5/8, 6/8, 7/8, 8/8] for each non-anchor carrier (or equivalently: [1/8, ¼, 3/8, ½, 5/8, %, 7/8, 1]). Then the "probability" value for the anchor would be 1 minus the sum of the "probability" values for all non-anchor carriers in the cell. Then instead of using a UE_ID to distribute the NPRACH accesses, the UE would before each RA attempt draw a random number that is compared with the "probability" value to determine what carrier to use. To illustrate this with an example assume a NB-IoT cell has 2 non-anchor carriers that can be used by a UE in a certain CE-level. If the following load distribution is wanted: 12.5% on the anchor carrier, 37.5% on non-anchor carrier 1, and 50% on non-anchor carrier 2, then the following value should be transmitted on SI: 3/8 for non-anchor carrier 1, and 4/8 for non-anchor carrier 2.

Yet another solution in other embodiments is to introduce an optional UE identity bitmask of variable bit length called nprach-Resource-UE-Id-Mask below. If this bitmask is provided in an NPRACH resource configuration, a UE chooses that resource if the following criterion is satisfied: UE_ID mod 2n = nprach-Resource-UE-Id-Mask, where n is the number of bits in nprach-Resource-UE-Id-Mask.

For example, assume that an operator has three NPRACH configurations serving the same CE-level on its non-anchor carriers. Assume also that an optional 2-bit nprach-Resource-UE-Id-Mask is configured per NPRACH resource as follows: nprach-Resource-UE-Id-Mask = '01' for a non-anchor carrier NPRACH resource 1, nprach-Resource-UE-Id-Mask = '10' for a non-anchor carrier NPRACH resource 2, and absent (no bitmask provided) for non-anchor NPRACH resource 3. Then, amongst UEs with the same CE-level, UEs with (UE_ID mod 4 = 1) choose resource 1, UEs with (IMSI mod 4 = 2) choose resource 2, and the remaining UEs that do not fulfill the criterion choose resource 3. Assuming a uniform distribution of UE_ID digits amongst UEs, this example leads to that roughly 25% of the UEs choose resource 1, 25% choose resource 2, and the remaining 50% choose resource 3. Note that 3 non-anchor carriers are exemplified here, but could just as well be a mixture of anchor and non-anchor carriers.

For the solutions above where a UE identity (UE_ID) is used for the load distribution, the result would be that as long as the UE is in the same CE-level the same NPRACH resource would be selected. This might not be the best solution if one carrier is highly loaded or experiences large interference. Thus, a rule in some embodiments is introduced that the UE should only make a re-attempt X number of times on the same NPRACH resource of a carrier and after those attempts another carrier is selected for the next X attempts. It is specified today (for Rel-13) that the UE must keep track of both the number of attempts per CE-level and the total number of attempts in section 5.1 of 3GPP TS 36.321. The variables used for this are PREAMBLE_TRANSMISSION_COUNTER_CE and PREAMBLE_TRANSMISSION_COUNTER respectively. In some embodiments herein, the value X is either hard-coded in the 3GPP specification or signaled on system information. Also dynamic changes of X may specified, e.g. for the first time use the carrier X times and after each change of carrier decrease the number of attempts with for example X/2 (until 1 is reached).

In some embodiments, only Rel-14 UEs may be steered away from an anchor carrier. All Rel-13 UEs will use only anchor carrier and will not understand how to go to non-anchors (as they are not implemented according to Rel-14 of the standard).

So, the Rel-14 UEs can either be distributed in an even or an uneven way. The result of the whole cell distribution will of course be hard to know/control in an exact way. However, suppose the network knows (or estimates) that there are 1000 Rel-13 UEs and 1000 Rel-14 UEs camping in the cell. If it then has one non-anchor carrier it can for example control that all Rel-14 UEs shall use the non-anchor. This will result in a 50% distribution of the UEs on each carrier. If it instead allocates more NPRACH resources on the anchor carrier it may want to distribute 50% or the Rel-14 UEs on each carrier, i.e. then anchor carrier will have 1000+0.5*1000=1500 UEs and the non-anchor carrier 500 UEs.

In another example, though, it may want a smaller fraction of the Rel-14 UEs on the non-anchor, say 25% of them. In this case, it will unevenly distribute them with 25% on anchor carrier and 75% on non-anchor carrier, and the total would be 1250 UEs on anchor carrier and 750 UEs on non-anchor carrier. In more complex scenarios, including more non-anchors, each carrier may have different NPRACH capacity. In this case, some embodiments unevenly distribute the UEs.

Note that a network node 12 as described above may perform the methods in Figures 2, 4, and/or 5 and any other processing herein by implementing any functional means or units. In one embodiment, for example, the network node 12 comprises respective circuits or circuitry configured to perform the steps shown in Figures 2, 4, and/or 5. The circuits or circuitry in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more processors, carries out the techniques described herein.

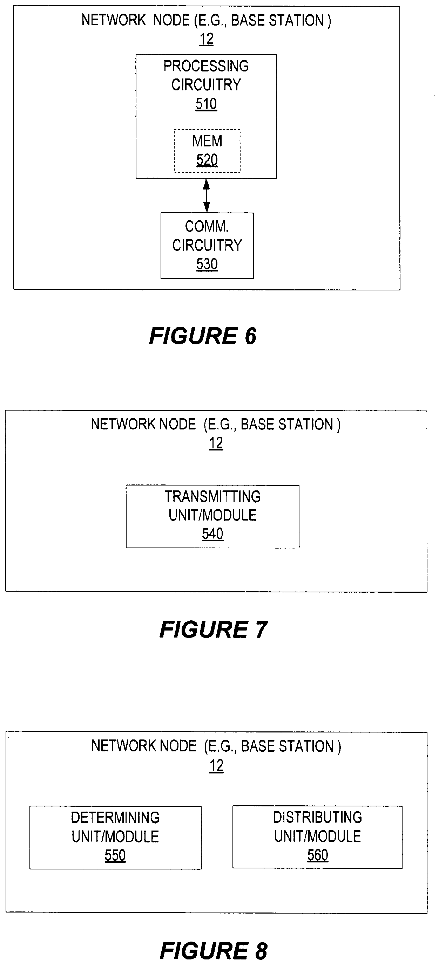

Figure 6 illustrates the network node 12 as implemented in accordance with one or more embodiments. As shown, the network node 12 includes processing circuitry 510 and communication circuitry 530. The communication circuitry 530 is configured to transmit and/or receive information to and/or from one or more other nodes, e.g., via any communication technology. Such communication may occur via one or more antennas that are either internal or external to the network node 500. The processing circuitry 510 is configured to perform processing described above, e.g., in Figures 2, 4, and/or 5, such as by executing instructions stored in memory 520. The processing circuitry 510 in this regard may implement certain functional means, units, or modules.

Figure 7 illustrates the network node 12 as implemented in accordance with one or more other embodiments. As shown, the network node 12 implements various functional means, units, or modules, e.g., via the processing circuitry 510 in Figure 6 and/or via software code. These functional means, units, or modules, e.g., for implementing the method in Figure 2A, include for instance a transmitting unit or module 540 for transmitting, to a wireless device 14A that supports random access on a non-anchor carrier 18B, configuration information 20 that governs on which carrier within a set 16 of carriers the wireless device 14A is to perform random access. This set 16 of carriers includes an anchor carrier 18A and one or more non-anchor carriers 18B. In some embodiments, the configuration information 20 for example indicates a probability value that is assigned to each of one or more of the carriers in the set 16.

Figure 8 illustrates the network node 12 as implemented in accordance with still one or more other embodiments. As shown, the network node 12 implements various functional means, units, or modules, e.g., via the processing circuitry 510 in Figure 6 and/or via software code. These functional means, units, or modules, e.g., for implementing the method in Figure 4, include for instance a determining unit or module 550 for determining an extent to which wireless devices that do not support random access on a non-anchor carrier compete for random access radio resources on an anchor carrier and/or an extent to which wireless devices that support random access on a non-anchor carrier compete for random access radio resources across one or more non-anchor carriers. Also included is a distribution unit or module 560 for distributing wireless devices that support random access on a non-anchor carrier across the anchor carrier and the one or more non-anchor carriers for performance of random access, based on the determining.

Note further that a wireless device 14A as described above may perform the method in Figure 2B and any other processing herein by implementing any functional means or units. In one embodiment, for example, the wireless device comprises respective circuits or circuitry configured to perform the steps shown in Figure 2B. The circuits or circuitry in this regard may comprise circuits dedicated to performing certain functional processing and/or one or more microprocessors in conjunction with memory. In embodiments that employ memory, which may comprise one or several types of memory such as read-only memory (ROM), random-access memory, cache memory, flash memory devices, optical storage devices, etc., the memory stores program code that, when executed by the one or more processors, carries out the techniques described herein.

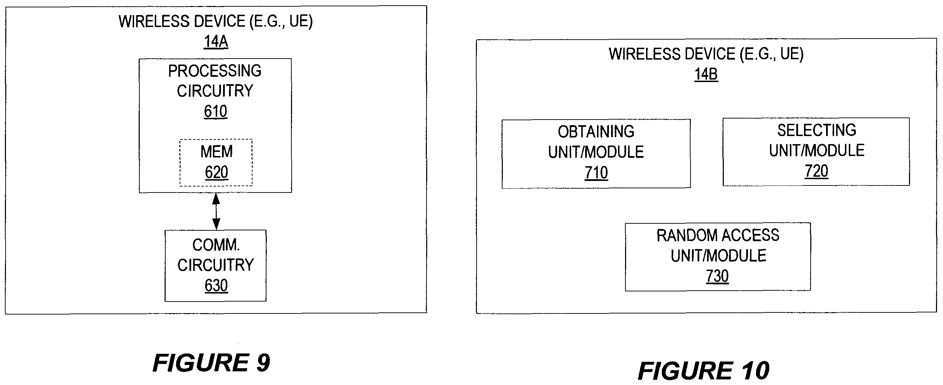

Figure 9 illustrates a wireless device 14A implemented in accordance with one or more embodiments. As shown, the wireless device 14A includes processing circuitry 610 and communication circuitry 630. The communication circuitry 630 is configured to transmit and/or receive information to and/or from one or more other nodes, e.g., via any communication technology. Such communication may occur via one or more antennas that are either internal or external to the wireless device 14A. The processing circuitry 610 is configured to perform processing described above, e.g., in Figure 2B, such as by executing instructions stored in memory 620. The processing circuitry 610 in this regard may implement certain functional means, units, or modules.

Figure 10 illustrates a wireless device 14A implemented in accordance with one or more other embodiments. As shown, the wireless device 14A implements various functional means, units, or modules, e.g., via the processing circuitry 610 in Figure 9 and/or via software code. These functional means, units, or modules, e.g., for implementing the method in Figure 2B, include for instance an obtaining unit or module 710 for obtaining configuration information 20 that governs on which carrier within a set 16 of carriers the wireless device 14A is to perform random access, wherein the set 16 of carriers includes an anchor carrier 18A and a non-anchor carrier 18B. The configuration information 20 in some embodiments indicates a probability value that is assigned to each of one or more of the carriers in the set 16. Also included is a selecting unit or module 720 for selecting, from among the carriers in the set 16, a carrier on which to perform random access, in accordance with the configuration information 20. Further included is a random access unit or module 730 for performing random access on the selected carrier.

Those skilled in the art will also appreciate that embodiments herein further include corresponding computer programs.

A computer program comprises instructions which, when executed on at least one processor of a node, cause the node to carry out any of the respective processing described above. A computer program in this regard may comprise one or more code modules corresponding to the means or units described above.

Embodiments further include a carrier containing such a computer program. This carrier may comprise one of an electronic signal, optical signal, radio signal, or computer readable storage medium.

In this regard, embodiments herein also include a computer program product stored on a non-transitory computer readable (storage or recording) medium and comprising instructions that, when executed by a processor of a node, cause the node to perform as described above.

Embodiments further include a computer program product comprising program code portions for performing the steps of any of the embodiments herein when the computer program product is executed by a computing device. This computer program product may be stored on a computer readable recording medium.

Note that a radio node herein is any type of node (e.g., a radio network node or wireless device) capable of communicating with another node over radio signals. A radio network node is any type of radio node within a wireless communication network, such as a base station. A network node is any type of node within a wireless communication network, whether a radio network node or not. A wireless device is any type of radio node capable of communicating with a radio network node over radio signals. A wireless device may therefore refer to a user equipment (UE), a machine-to-machine (M2M) device, a machine-type communications (MTC) device, a NB-IoT device, etc. However it should be noted that the UE does not necessarily have a "user" in the sense of an individual person owning and/or operating the device. A wireless device may also be referred to as a radio device, a radio communication device, a wireless terminal, or simply a terminal - unless the context indicates otherwise, the use of any of these terms is intended to include device-to-device UEs or devices, machine-type devices or devices capable of machine-to-machine communication, sensors equipped with a wireless device, wireless-enabled table computers, mobile terminals, smart phones, laptop-embedded equipped (LEE), laptop-mounted equipment (LME), USB dongles, wireless customer-premises equipment (CPE), etc. In the discussion herein, the terms machine-to-machine (M2M) device, machine-type communication (MTC) device, wireless sensor, and sensor may also be used. It should be understood that these devices may be UEs, but are generally configured to transmit and/or receive data without direct human interaction.

In an internet of things (IoT) scenario, a wireless device as described herein may be, or may be comprised in, a machine or device that performs monitoring or measurements, and transmits the results of such monitoring measurements to another device or a network. Particular examples of such machines are power meters, industrial machinery, or home or personal appliances, e.g. refrigerators, televisions, personal wearables such as watches etc. In other scenarios, a wireless communication device as described herein may be comprised in a vehicle and may perform monitoring and/or reporting of the vehicle's operational status or other functions associated with the vehicle.

**Claims**

1. A method performed by a wireless device (14A) in a wireless communication system (10) for performing random access, wherein the wireless communication system (10) is a narrowband internet of things, NB-IoT, system and the wireless device (14A) supports random access on a non-anchor carrier, the method comprising:

   obtaining (210) configuration information (20) that governs on which carrier within a set (16) of carriers the wireless device (14A) is to perform random access, wherein the set (16) of carriers includes an anchor carrier (14A) and one or more non-anchor carriers (14B), wherein the configuration information (20) indicates a probability value (20A) that is assigned to each of one or more of the carriers in the set (16);
   selecting (220), from among the carriers in the set (16), a carrier on which to perform random access, in accordance with the configuration information (20); and
   performing (230) random access on the selected carrier.

2. The method of claim 1, wherein said selecting comprises randomly selecting the carrier from among the carriers in the set (16) using probability values that are assigned to the respective carriers in accordance with the configuration information (20).

3. The method of claim 2, further comprising calculating one or more of the probability values from the configuration information (20).

4. The method of any of claims 1-3, wherein said obtaining comprises receiving the configuration information (20) via system information broadcast.

5. The method of any of claims 1-4, wherein said selecting comprises randomly drawing a value and comparing the randomly drawn value to the probability value (20A) assigned to at least one of the carriers in the set (16).

6. The method of any of claims 1-5, wherein selecting a carrier on which to perform random access comprises selecting a random access radio resource from among different random access radio resources on the different respective carriers in the set (16), and wherein said performing comprises performing random access on the selected random access radio resource.

7. A method performed by a network node (12) configured for use in a wireless communication system (10) being a narrowband internet of things, NB-IoT, system, the method comprising:
transmitting (110), to a wireless device (14A) that supports random access on a non-anchor carrier, configuration information (20) that governs on which carrier within a set (16) of carriers the wireless device (14A) is to perform random access, wherein the set (16) of carriers includes an anchor carrier (14A) and one or more non-anchor carriers (14B), wherein the configuration information (20) indicates a probability value (20A) that is assigned to each of one or more of the carriers in the set (16).

8. The method of claim 7, wherein in accordance with the configuration information (20) probability values are assigned to respective carriers in the set (16) for use by the wireless device (14A) in randomly selecting a carrier on which to perform random access.

9. The method of any of claims 7-8, wherein said transmitting comprises broadcasting the configuration information (20) as system information.

10. The method of any of claims 1-9, wherein a probability value (20A) assigned to the anchor carrier (14A) is configurable to be different than a probability value (20A) assigned to a non-anchor carrier.

11. The method of any of claims 1-10, wherein probability values assigned to respective non-anchor carriers (14B) are configurable to be equal.

12. The method of any of claims 1-11, wherein probability values assigned to respective non-anchor carriers (14B) are equal.

13. The method of any of claims 1-12, wherein different random access radio resources are defined on different respective carriers in the set (16) for a coverage enhancement level of the wireless device (14A).

14. The method of any of claims 1-13, wherein the carriers in the set (16) are uplink carriers.

15. A wireless device (14A) configured for use in a wireless communication system (10) for performing random access, wherein the wireless communication system (10) is a narrowband internet of things, NB-IoT, system and the wireless device (14A) is configured to support random access on a non-anchor carrier, the wireless device (14A) configured to:

    obtain configuration information (20) that governs on which carrier within a set (16) of carriers the wireless device (14A) is to perform random access, wherein the set (16) of carriers includes an anchor carrier (14A) and one or more non-anchor carriers (14B), wherein the configuration information (20) indicates a probability value (20A) that is assigned to each of one or more of the carriers in the set (16);
    select, from among the carriers in the set (16), a carrier on which to perform random access, in accordance with the configuration information (20); and
    perform random access on the selected carrier.

16. The wireless device of claim 15, configured to perform the method of any of claims 2-6 and 10-14.

17. A network node (12) configured for use in a wireless communication system (10) being a narrowband internet of things, NB-IoT, system, the network node (12) configured to:
transmit, to a wireless device (14A) that supports random access on a non-anchor carrier, configuration information (20) that governs on which carrier within a set (16) of carriers the wireless device (14A) is to perform random access, wherein the set (16) of carriers includes an anchor carrier (14A) and one or more non-anchor carriers (14B), wherein the configuration information (20) indicates a probability value (20A) that is assigned to each of one or more of the carriers in the set (16).

18. The network node of claim 17, configured to perform the method of any of claims 8-14.

19. A computer program comprising instructions which, when executed by at least one processor of a wireless device (14A), causes the wireless device (14A) to carry out the method of any of claims 1-6 and 10-14.

20. A computer program comprising instructions which, when executed by at least one processor of a network node (12), causes the network node (12) to carry out the method of any of claims 7-14.

21. A carrier containing the computer program of any of claims 19-20, wherein the carrier is one of an electronic signal, optical signal, radio signal, or computer readable storage medium.

**Patentansprüche**

1. Verfahren, das von einer drahtlosen Vorrichtung (14A) in einem drahtlosen Kommunikationsnetzwerk (10) zum Durchführen von Direktzugriff durchgeführt wird, wobei das drahtlose Kommunikationssystem (10) ein Schmalband-Internet-der-Dinge, NB-IoT,-System ist, und die drahtlose Vorrichtung (14A) Direktzugriff auf einem Nicht-Ankerträger unterstützt, wobei das Verfahren umfasst:

   Abrufen (210) von Konfigurationsinformationen (20), die regulieren, auf welchem Träger innerhalb eines Satzes (16) von Trägern die drahtlose Vorrichtung (14A) Direktzugriff durchführen soll, wobei der erste Satz (16) von Trägern einen Ankerträger (14A) und einen oder mehrere Nicht-Ankerträger (14B) umfasst, wobei die Konfigurationsinformationen (20) einen Wahrscheinlichkeitswert (20A) angeben, der jedem von einem oder mehreren der Träger im Satz (16) zugeordnet ist;
   Auswählen (220) unter den Trägern im Satz (16) von Trägern eines Trägers, auf welchem Direktzugriff durchgeführt werden soll, gemäß den Konfigurationsinformationen (20); und
   Durchführen (230) von Direktzugriff auf dem ausgewählten Träger.

2. Verfahren nach Anspruch 1, wobei das Auswählen ein zufälliges Auswählen des Trägers unter den Trägern im Satz (16) unter Verwendung von Wahrscheinlichkeitswerten umfasst, die den jeweiligen Trägern gemäß den Konfigurationsinformationen (20) zugeordnet sind.

3. Verfahren nach Anspruch 2, ferner umfassend ein Berechnen eines oder mehrerer der Wahrscheinlichkeitswerte aus den Konfigurationsinformationen (20).

4. Verfahren nach einem der Ansprüche 1 bis 3, wobei das Abrufen ein Empfangen der Konfigurationsinformationen (20) über Systeminformationsrundsendung umfasst.

5. Verfahren nach einem der Ansprüche 1 bis 4, wobei das Auswählen ein zufälliges Ziehen des Wertes und Vergleichen des zufällig gezogenen Wertes mit dem Wahrscheinlichkeitswert (20A) umfasst, der mindestens einem der Träger im Satz (16) zugeordnet ist.

6. Verfahren nach einem der Ansprüche 1 bis 5, wobei das Auswählen eines Trägers, auf welchem Direktzugriff durchgeführt werden soll, ein Auswählen einer Direktzugriffsfunkressource unter verschiedenen Direktzugriffsfunkressourcen auf den verschiedenen jeweiligen Trägern im Satz (16) umfasst, und wobei das Durchführen ein Durchführen von Direktzugriff auf der ausgewählten Direktzugriffsfunkressource umfasst.

7. Verfahren, das von einem Netzwerkknoten (12) durchgeführt wird, der zur Verwendung in einem drahtlosen Kommunikationssystem (10) konfiguriert ist, das ein Schmalband-Internet-der-Dinge, NB-IoT,-System ist, wobei das Verfahren umfasst:
   Senden (110) von Konfigurationsinformationen (20), die regulieren, auf welchem Träger innerhalb eines Satzes (16) von Trägern eine drahtlose Vorrichtung (14A) Direktzugriff durchführen soll, an die drahtlose Vorrichtung (14A), die Direktzugriff auf einem Nicht-Ankerträger unterstützt, wobei der erste Satz (16) von Trägern einen Ankerträger (14A) und einen oder mehrere Nicht-Ankerträger (14B) umfasst, wobei die Konfigurationsinformationen (20) einen Wahrscheinlichkeitswert (20A) angeben, der jedem von einem oder mehreren der Träger im Satz (16) zugeordnet ist.

8. Verfahren nach Anspruch 7, wobei gemäß den Konfigurationsinformationen (20) Wahrscheinlichkeitswerte jeweiligen Trägern im Satz (16) zur Verwendung durch die drahtlose Vorrichtung (14A) beim zufälligen Auswählen eines Trägers zugeordnet werden, auf welchem Direktzugriff durchgeführt werden soll.

9. Verfahren nach einem der Ansprüche 7 bis 8, wobei das Senden ein Rundsenden der Konfigurationsinformationen (20) als Systeminformationen umfasst.

10. Verfahren nach einem der Ansprüche 1 bis 9, wobei ein Wahrscheinlichkeitswert (20A), der dem Ankerträger (14A) zugeordnet wird, so konfiguriert werden kann, dass er anders als ein Wahrscheinlichkeitswert (20A) ist, der einem Nicht-Ankerträger zugeordnet wird.

11. Verfahren nach einem der Ansprüche 1 bis 10, wobei Wahrscheinlichkeitswerte, die jeweiligen Nicht-Ankerträger (14B) zugeordnet werden, so konfiguriert werden können, dass sie gleich sind.

12. Verfahren nach einem der Ansprüche 1 bis 11, wobei Wahrscheinlichkeitswerte, die jeweiligen Nicht-Ankerträger (14B) zugeordnet werden, gleich sind.

13. Verfahren nach einem der Ansprüche 1 bis 12, wobei verschiedene Direktzugriffsfunkressourcen auf verschiedenen jeweiligen Trägern im Satz (16) für einen Versorgungsverbesserungsgrad der drahtlosen Vorrichtung (14A) definiert werden.

14. Verfahren nach einem der Ansprüche 1 bis 13, wobei die Träger im Satz (16) Uplink-Träger sind.

15. Drahtlose Vorrichtung (14A), die zur Verwendung in einem drahtlosen Kommunikationsnetzwerk (10) zum Durchführen von Direktzugriff konfiguriert ist, wobei das drahtlose Kommunikationssystem (10) ein Schmalband-Internet-der-Dinge, NB-IoT,-System ist, und die drahtlose Vorrichtung (14A) zum Unterstützen von Direktzugriff auf einem Nicht-Ankerträger konfiguriert ist, wobei die drahtlose Vorrichtung (14A) konfiguriert ist zum:

Abrufen von Konfigurationsinformationen (20), die regulieren, auf welchem Träger innerhalb eines Satzes (16) von Trägern die drahtlose Vorrichtung (14A) Direktzugriff durchführen soll, wobei der erste Satz (16) von Trägern einen Ankerträger (14A) und einen oder mehrere Nicht-Ankerträger (14B) umfasst, wobei die Konfigurationsinformationen (20) einen Wahrscheinlichkeitswert (20A) angeben, der jedem von einem oder mehreren der Träger im Satz (16) zugeordnet ist;
Auswählen unter den Trägern im Satz (16) von Trägern eines Trägers, auf welchem Direktzugriff durchgeführt werden soll, gemäß den Konfigurationsinformationen (20); und
Durchführen von Direktzugriff auf dem ausgewählten Träger.

16. Drahtlose Vorrichtung nach Anspruch 15, die zum Durchführen des Verfahrens nach einem der Ansprüche 2 bis 6 und 10 bis 14 konfiguriert ist.

17. Netzwerkknoten (12), der zur Verwendung in einem drahtlosen Kommunikationssystem (10) konfiguriert ist, das ein Schmalband-Internet-der-Dinge, NB-IoT,-System ist, wobei der Netzwerkknoten (12) konfiguriert ist zum: Senden von Konfigurationsinformationen (20), die regulieren, auf welchem Träger innerhalb eines Satzes (16) von Trägern eine drahtlose Vorrichtung (14A) Direktzugriff durchführen soll, an die drahtlose Vorrichtung (14A), die Direktzugriff auf einem Nicht-Ankerträger unterstützt, wobei der erste Satz (16) von Trägern einen Ankerträger (14A) und einen oder mehrere Nicht-Ankerträger (14B) umfasst, wobei die Konfigurationsinformationen (20) einen Wahrscheinlichkeitswert (20A) angeben, der jedem von einem oder mehreren der Träger im Satz (16) zugeordnet ist.

18. Netzwerkknoten nach Anspruch 17, der zum Durchführen des Verfahrens nach einem der Ansprüche 8 bis 14 konfiguriert ist.

19. Computerprogramm, umfassend Anweisungen, die bei Ausführung durch mindestens einen Prozessor einer drahtlosen Vorrichtung (14A) die drahtlose Vorrichtung (14A) zum Durchführen des Verfahrens nach einem der Ansprüche 1 bis 6 und 10 bis 14 veranlassen.

20. Computerprogramm, umfassend Anweisungen, die bei Ausführung durch mindestens einen Prozessor eines Netzwerkknotens (12) den Netzwerkknoten (12) zum Durchführen des Verfahrens nach einem der Ansprüche 7 bis 14 veranlassen.

21. Datenträger, der das Computerprogramm nach einem der Ansprüche 19 bis 20 enthält, wobei der Datenträger eines von einem elektronischen Signal, einem optischen Signal, einem Funksignal oder einem computerlesbaren Speichermedium ist.

**Revendications**

1. Procédé effectué par un dispositif sans fil (14A) dans un système de communication sans fil (10) pour effectuer un accès aléatoire, dans lequel le système de communication sans fil (10) est un système d'internet de choses de bande étroite, NB-IoT, et le dispositif sans fil (14A) prend en charge un accès aléatoire sur une porteuse de non-ancrage, le procédé comprenant :

   l'obtention (210) d'informations de configuration (20) régissant la porteuse, parmi un ensemble (16) de porteuses, sur laquelle le dispositif sans fil (14A) doit effectuer un accès aléatoire, dans lequel l'ensemble (16) de porteuses inclut une porteuse d'ancrage (14A) et une ou plusieurs porteuses de non-ancrage (14B), dans lequel les informations de configuration (20) indiquent une valeur de probabilité (20A) qui est assignée à chacune des une ou plusieurs porteuses dans l'ensemble (16) ;
   la sélection (220), parmi les porteuses dans l'ensemble (16), d'une porteuse sur laquelle effectuer un accès aléatoire, en fonction des informations de configuration (20) ; et
   l'exécution (230) d'un accès aléatoire sur la porteuse sélectionnée.

2. Procédé selon la revendication 1, dans lequel ladite sélection comprend la sélection aléatoire de la porteuse parmi les porteuses dans l'ensemble (16) en utilisant des valeurs de probabilité qui sont assignées aux porteuses respectives en fonction des informations de configuration (20).

3. Procédé selon la revendication 2, comprenant en outre le calcul d'une ou plusieurs des valeurs de probabilité à partir des informations de configuration (20) .

4. Procédé selon l'une quelconque des revendications 1 à 3, dans lequel ladite obtention comprend la réception des informations de configuration (20) par l'intermédiaire d'une diffusion d'informations de système.

5. Procédé selon l'une quelconque des revendications 1 à 4, dans lequel ladite sélection comprend le tirage aléatoire d'une valeur et la comparaison de la valeur tirée aléatoirement à la valeur de probabilité (20A) assignée à au moins l'une des porteuses dans l'ensemble (16).

6. Procédé selon l'une quelconque des revendications 1 à 5, dans lequel la sélection d'une porteuse sur laquelle effectuer un accès aléatoire comprend la sélection d'une ressource radio d'accès aléatoire parmi différentes ressources radio d'accès aléatoire sur les différentes porteuses respectives dans l'ensemble (16), et dans lequel ladite exécution comprend l'exécution d'un accès aléatoire sur la ressource radio d'accès aléatoire sélectionnée.

7. Procédé effectué par un nœud de réseau (12) configuré pour être utilisé dans un système de communication sans fil (10) étant un système d'internet de choses de bande étroite, NB-IoT, le procédé comprenant :
   la transmission (110), à destination d'un dispositif sans fil (14A) prenant en charge un accès aléatoire sur une porteuse de non-ancrage, d'informations de configuration (20) régissant la porteuse, parmi un ensemble (16) de porteuses, sur laquelle le dispositif sans fil (14A) doit effectuer un accès aléatoire, dans lequel l'ensemble (16) de porteuses inclut une porteuse d'ancrage (14A) et une ou plusieurs porteuses de non-ancrage (14B), dans lequel les informations de configuration (20) indiquent une valeur de probabilité (20A) qui est assignée à chacune des une ou plusieurs porteuses dans l'ensemble (16).

8. Procédé selon la revendication 7, dans lequel, en fonction des informations de configuration (20), des valeurs de probabilité sont assignées à des porteuses respectives dans l'ensemble (16) à utiliser par le dispositif sans fil (14A) pour la sélection aléatoire d'une porteuse sur laquelle effectuer un accès aléatoire.

9. Procédé selon l'une quelconque des revendications 7 et 8, dans lequel ladite transmission comprend la diffusion des informations de configuration (20) en tant qu'informations de système.

10. Procédé selon l'une quelconque des revendications 1 à 9, dans lequel une valeur de probabilité (20A) assignée à la porteuse d'ancrage (14A) est configurable pour être différente d'une valeur de probabilité (20A) assignée à une porteuse de non-ancrage.

11. Procédé selon l'une quelconque des revendications 1 à 10, dans lequel des valeurs de probabilité assignées à des porteuses de non-ancrage (14B) respectives sont configurables pour être égales.

**12.** Procédé selon l'une quelconque des revendications 1 à 11, dans lequel des valeurs de probabilité assignées à des porteuses de non-ancrage (14B) respectives sont égales.

**13.** Procédé selon l'une quelconque des revendications 1 à 12, dans lequel des ressources radio d'accès aléatoire différentes sont définies sur différentes porteuses respectives dans l'ensemble (16) pour un niveau d'amélioration de couverture du dispositif sans fil (14A).

**14.** Procédé selon l'une quelconque des revendications 1 à 13, dans lequel les porteuses dans l'ensemble (16) sont des porteuses de liaison montante.

**15.** Dispositif sans fil (14A) configuré pour être utilisé dans un système de communication sans fil (10) pour effectuer un accès aléatoire, dans lequel le système de communication sans fil (10) est un système d'internet de choses de bande étroite, NB-IoT, et le dispositif sans fil (14A) est configuré pour prendre en charge un accès aléatoire sur une porteuse de non-ancrage, le dispositif sans fil (14A) étant configuré pour :

l'obtention d'informations de configuration (20) régissant la porteuse, parmi un ensemble (16) de porteuses, sur laquelle le dispositif sans fil (14A) doit effectuer un accès aléatoire, dans lequel l'ensemble (16) de porteuses inclut une porteuse d'ancrage (14A) et une ou plusieurs porteuses de non-ancrage (14B), dans lequel les informations de configuration (20) indiquent une valeur de probabilité (20A) qui est assignée à chacune des une ou plusieurs porteuses dans l'ensemble (16) ;
la sélection, parmi les porteuses dans l'ensemble (16), d'une porteuse sur laquelle effectuer un accès aléatoire, en fonction des informations de configuration (20) ; et
l'exécution d'un accès aléatoire sur la porteuse sélectionnée.

**16.** Dispositif sans fil selon la revendication 15, configuré pour effectuer le procédé selon l'une quelconque des revendications 2 à 6 et 10 à 14.

**17.** Nœud de réseau (12) configuré pour être utilisé dans un système de communication sans fil (10) étant un système d'internet de choses de bande étroite, NB-IoT, le nœud de réseau (12) étant configuré pour :
la transmission, à destination d'un dispositif sans fil (14A) prenant en charge un accès aléatoire sur une porteuse de non-ancrage, d'informations de configuration (20) régissant la porteuse, parmi un ensemble (16) de porteuses, sur laquelle le dispositif sans fil (14A) doit effectuer un accès aléatoire, dans lequel l'ensemble (16) de porteuses inclut une porteuse d'ancrage (14A) et une ou plusieurs porteuses de non-ancrage (14B), dans lequel les informations de configuration (20) indiquent une valeur de probabilité (20A) qui est assignée à chacune des une ou plusieurs porteuses dans l'ensemble (16).

**18.** Nœud de réseau selon la revendication 17, configuré pour effectuer le procédé selon l'une quelconque des revendications 8 à 14.

**19.** Programme informatique comprenant des instructions qui, lorsqu'elles sont exécutées par au moins un processeur d'un dispositif sans fil (14A), amènent le dispositif sans fil (14A) à effectuer le procédé selon l'une quelconque des revendications 1 à 6 et 10 à 14.

**20.** Programme informatique comprenant des instructions qui, lorsqu'elles sont exécutées par au moins un processeur d'un nœud de réseau (12), amènent le nœud de réseau (12) à effectuer le procédé selon l'une quelconque des revendications 7 à 14.

**21.** Porteuse contenant le programme informatique selon l'une quelconque des revendications 19 et 20, dans laquelle la porteuse est l'un d'un signal électronique, d'un signal optique, d'un signal radio ou d'un support de mémorisation lisible par ordinateur.

CONFIGURATION INFORMATION 20

PROBABILITY VALUE(S)
20A

10

12

18A

18B

16

14A

14B

**FIGURE 1**

EP 3 498 007 B1

200

OBTAIN CONFIGURATION INFORMATION THAT GOVERNS ON WHICH CARRIER WITHIN THE SET OF CARRIERS THE WIRELESS DEVICE IS TO PERFORM RANDOM ACCESS
210

SELECT, FROM AMONG THE CARRIERS IN THE SET, A CARRIER ON WHICH TO PERFORM RANDOM ACCESS, IN ACCORDANCE WITH THE CONFIGURATION INFORMATION
220

PERFORM RANDOM ACCESS ON THE SELECTED CARRIER
230

14A

*FIGURE 2B*

100

12

GENERATE CONFIGURATION INFORMATION
120

TRANSMIT CONFIGURATION INFORMATION THAT GOVERNS ON WHICH CARRIER WITHIN THE SET OF CARRIERS A WIRELESS DEVICE IS TO PERFORM RANDOM ACCESS
110

*FIGURE 2A*

**FIGURE 3**

EP 3 498 007 B1

300

12

DETERMINE AN EXTENT TO WHICH WIRELESS DEVICES THAT DO NOT SUPPORT RANDOM ACCESS ON A NON-ANCHOR CARRIER COMPETE FOR RANDOM ACCESS RADIO RESOURCES ON AN ANCHOR CARRIER AND/OR AN EXTENT TO WHICH WIRELESS DEVICES THAT SUPPORT RANDOM ACCESS ON A NON-ANCHOR CARRIER COMPETE FOR RANDOM ACCESS RADIO RESOURCES ACROSS ONE OR MORE NON-ANCHOR CARRIERS

310

DISTRIBUTE WIRELESS DEVICES THAT SUPPORT RANDOM ACCESS ON A NON-ANCHOR CARRIER ACROSS THE SET OF CARRIERS FOR PERFORMANCE OF RANDOM ACCESS, BASED ON THE DETERMINING

320

*FIGURE 4*

EP 3 498 007 B1

400

12

DETERMINE CAPACITY OF RANDOM ACCESS RADIO RESOURCES
ACROSS THE SET OF CARRIERS AND/OR COMPETITION FOR
RANDOM ACCESS RADIO RESOURCES ACROSS THE SET OF
CARRIERS
420

SELECTIVELY DISTRIBUTE WIRELESS DEVICES UNEVENLY ACROSS
THE SET OF CARRIERS FOR PERFORMANCE OF RANDOM ACCESS
410

*FIGURE 5*

NETWORK NODE (E.G., BASE STATION)
12

PROCESSING
CIRCUITRY
510

MEM
520

COMM.
CIRCUITRY
530

**FIGURE 6**

NETWORK NODE (E.G., BASE STATION)
12

TRANSMITTING
UNIT/MODULE
540

**FIGURE 7**

NETWORK NODE (E.G., BASE STATION)
12

DETERMINING
UNIT/MODULE
550

DISTRIBUTING
UNIT/MODULE
560

**FIGURE 8**

EP 3 498 007 B1

WIRELESS DEVICE (E.G., UE)
14A

PROCESSING
CIRCUITRY
610

MEM
620

COMM.
CIRCUITRY
630

**FIGURE 9**

WIRELESS DEVICE (E.G., UE)
14B

OBTAINING
UNIT/MODULE
710

SELECTING
UNIT/MODULE
720

RANDOM ACCESS
UNIT/MODULE
730

**FIGURE 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011041926 A1
- WO 2013026184 A1
- WO 2015108382 A1
- US 62371347 B